# EUROPÄISCHE PATENTSCHRIFT

(11) **EP 0 499 879 B1**
(45) Veröffentlichungstag und Bekanntmachung des Hinweises auf die Patenterteilung: **14.06.1995**
(21) Anmeldenummer: 92101852.9
(22) Anmeldetag: 05.02.1992
(51) Int. Cl.: A01D 34/73, A01D 69/02, A01D 75/20

(54) **Messerbefestigung für Elektro-Rasenmäher**
Blade assembly for electric lawn mower
Fixation de lame pour tondeuse à gazon électrique

(30) Priorität: 22.02.1991 DE 4105557
(43) Veröffentlichungstag der Anmeldung: 26.08.1992
(73) Patentinhaber: WOLF-Geräte GmbH Vertriebsgesellschaft KG, D-57518 Betzdorf (DE)
(72) Erfinder: Graf, Eberhard, W-5242 Kirchen (DE)
(74) Vertreter: Müller, Gerd, Dipl.-Ing.

(56) Entgegenhaltungen:
- DE-A- 2 049 609
- DE-U- 8 533 015
- FR-A- 2 216 898
- FR-A- 2 382 840
- FR-A- 2 448 281
- GB-A- 904 081
- GB-A- 2 053 643
- US-A- 4 300 336
- US-A- 4 790 071

## Beschreibung

Die Erfindung betrifft eine Vorrichtung zur Befestigung eines rotierenden Flügelmessers an der Motorwelle von Elektro-Rasenmähern, bei welcher eine Messerkupplung aus Isolierstoff, z. B. Kunststoff, durch eine zentrale Spannschraube mit der Motorwelle verbunden ist.

Der GB-A-904 081 ist ein Elektro-Rasenmäher als bekannt zu entnehmen, der mit einer Vorrichtung zur Befestigung eines rotierenden Flügelmessers an der Motorwelle versehen ist, bei welcher eine Messerkupplung aus Isolierstoff z. B. Kunststoff, durch eine zentrale Spannschraube mit der Motorwelle verbunden bzw. verbindbar ist. Hierbei wird die Messerkupplung von zwei Isolierstoffteilen, nämlich einem oberen, drehfest auf der Motorwelle verankerten Mitnehmer- bzw. Nabenteil und einem unteren, über die zentrale Spannschraube mit der Motorwelle verbindbaren Messerandruck- bzw. - verankerungsteil gebildet.

Bei derartigen Messerbefestigungen für Elektro-Rasenmäher ist nach der zugleich als VDE-Bestimmung 0701, Teil 1 und Teil 2, geltenden DIN 57701, Teil 1 und Teil 2, nur dann ein Messerwechsel zulässig, wenn nach Beendigung des Wechselvorgangs bzw. nach dem Wiedereinbau eine Hochspannungsprüfung zwischen dem Elektro-Motor und dem Flügelmesser vorgenommen wird.

Der besondere Nachteil dieser bekannten Ausgestaltung ist darin zu sehen, daß jeder Messerwechsel aufgrund der erforderlichen Sicherheitsprüfung praktisch nur von autorisierten Fachbetrieben durchgeführt werden kann und sich folglich auch nur mit relativ hohem Zeit- und Kostenaufwand - also nicht benutzerfreundlich - bewerkstelligen läßt.

Nach der FR-A-2 216 898 werden bei einem Rasenmäher zur Halterung der Schneidglieder an einem Gebläserotor lösbare Verschraubungen in Benutzung genommen. Als Antriebaggregat für den Gebläserotor dient dabei ein Einzylinder-Zweitakt-Verbrennungsmotor, so daß hier Probleme hinsichtlich der elektrischen Sicherheit überhaupt nicht auftreten.

Der Gebläserotor ist auch nicht als ein Kupplungskörper aus Isolierstoff vorgesehen und die Schneidglieder sind pendelnd bzw. schwenkbeweglich über die Verschraubung gehalten. Es ist also eine Festverbindung eines Flügelmessers mit einem Kupplungskörper nicht vorhanden.

Ziel der Erfindung ist eine benutzerfreundliche Auslegung von Elektro-Rasenmähern. Daher stellt sich die Aufgabe, eine gattungsgemäße Vorrichtung zur Befestigung von rotierenden Flügelmessern an der Motorwelle von Elektro-Rasenmähern zu schaffen, welche einen Messerwechsel zuläßt, zugleich aber die Aufrechterhaltung er elektrischen Sicherheit gewährleistet, ohne daß eine Hochspannungsprüfung zwischen Motor und Messer erforderlich wird.

Gelöst wird die gestellte Aufgabe dadurch
- daß die Messerkupplung einen einzigen Kupplungskörper aufweist, in dem die Spannschraube mit ihrem Kopf innerhalb einer einendig offenen Höhlung aufgenommen ist,
- daß dabei zwischen dieser Spannschraube bzw. der Endfläche ihres Kopfes und der freien Stirnfläche des Kupplungskörpers bzw. der Höhlungs-Öffnung ein Mindestabstand von 4 mm vorhanden ist,
- und daß das Flügelmesser an der Stirnfläche des Kupplungskörpers anliegend über wenigstens eine zusätzliche Verschraubung lösbar verankert ist, die eine seitliche Versetzlage zur Spannungschraube hat, sowie relativ zu dieser durch das Material des Kupplungskörpers abgeschirmt ist.

Bei einer Messerbefestigung dieser Art wird die elektrische Sicherheit nach der VDE-Bestimmung 0 730 Teil 1, § 29, gewährleistet, weil zwischen der zentralen Spannschraube und dem ihr zunächst gelegenen Bereich des Flügelmessers ein Mindest-Luftspalt-Abstand von 4 mm eingehalten ist. Ein solchermaß ausgelegter Rasenmäher läßt daher einen benutzerfreundlichen Messerwechsel zu.

Bewährt hat es sich nach der Erfindung, wenn die zusätzlichen Verschraubungen jeweils aus einer Kopfschraube und einer Mutter bestehen und dabei die Mutter - unverlierbar - in den Kupplungskörper eingesetzt bzw. eingeformt ist.

Bevorzugt kommt eine Befestigungsvorrichtung zum Einsatz, bei der zwei zusätzliche Vrschraubungen radial versetzt zur Spannschraube dem Kupplungskörper zugeordnet sind, weil hierdurch Unwuchten bezüglich der Messerbefestigung besonders einfach zu vermeiden sind.

Bewährt hat sich ferner, wenn im Rahmen der Erfindung der Kupplungskörper der Messerkupplung eine Baueinheit mit einem Lüfterrotor für die Motorkühlung bildet, und wenn dabei zwischen Motorwelle und Kupplungskörper eine Formschluß-Eingriffsverbindung vorgesehen wird. Im letzteren Falle braucht dann die zentrale Spannschraube lediglich die axiale Lagensicherung des Kupplungskörpers und/oder Lüfterrotors auf der Motorwelle zu bewirken, während die Drehmomentübertragung formschlüssig gesichert wird.

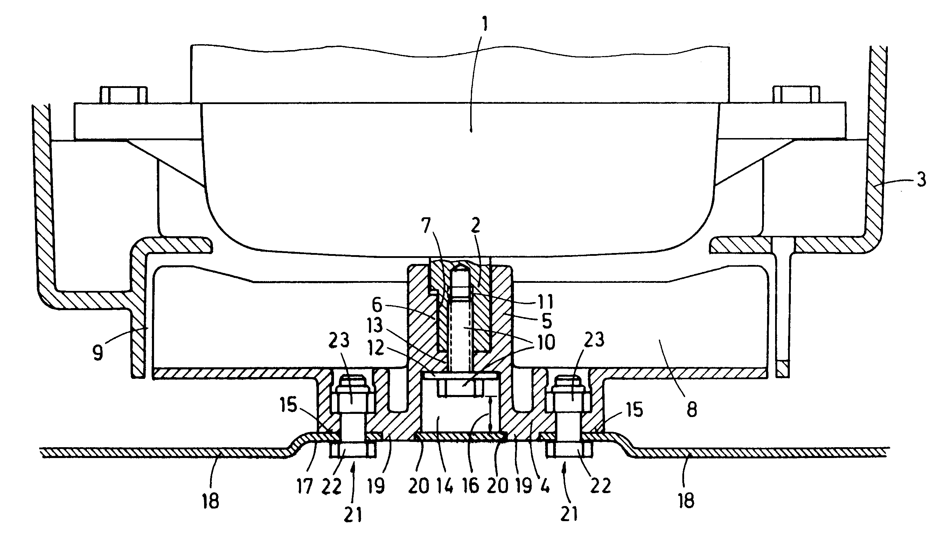

Die einzige Figur der Zeichnung zeigt an einem Elektro-Rasenmäher einen Vertikalschnitt durch dessen Chassis im Einbaubereich von Elektromotor und Flügelmesser, wobei im einzelnen die das Flügelmesser mit der Motorwelle verbindende Messerkupplung zu sehen ist.

Aus dieser Zeichnung geht hervor, daß der Elektromotor 1 in seiner Motorwelle 2 nach abwärts gerichtet auf das Chassis 3 des Rasenmähers montiert ist.

Von der Unterseite des Chassis 3 her ist auf die Motorwelle 2 ein Kupplungskörper 4 mit seiner Kupplungsmuffe 5 aufgeschoben. Dieser Kupplungskörper 4 ist dabei aus einem Isolierstoff, z.B Kunststoff, gefertigt, wobei seine Kupplungsmuffe 5 einen Mitnehmer 6 enthält, der in Formschlußeingriff mit einer etwa sekantial verlaufenden Kupplungsfläche 7 an der Motorwelle 2 gelangt.

Einstückig mit dem Kupplungskörper 4 ist noch ein Lüfterrotor 8 ausgeformt, der in eine halsartige Aufnahme 9 des Chassis 3 eingreift und welcher hauptsächlich zur Kühlung des Elektromotors 1 vorgesehen ist.

Zur Verbindung des Kupplungskörpers 4 über seine Kupplungsmuffe 5 mit der Motorwelle 2 dient eine zentrale Spannschraube 10, die sich mit ihrem Schaft in eine koaxiale Gewindebohrung 11 der Motorwelle 2 eindrehen läßt und dabei über ihren Kopf auf eine Unterlegscheibe 12 einwirkt, die ihr Widerlager an einer Endwand 13 der Kupplungsmuffe 5 findet.

An die Endwand 13 der Kupplungsmuffe 5 schließt sich im Kupplungskörper 4 eine nach unten offene Höhlung 14 an, in der nicht nur die Unterlegscheibe 12, sondern auch der Kopf der Spannschraube 10 aufgenommen wird. Die Tiefe der Höhlung 14 in Achsrichtung der Spannschraube 10 ist so bemessen, daß die freie Endfläche am Kopf der Spannschraube 10 von der freien Stirnfläche 15 des Kupplungskörpers 4 einen Abstand 16 einnimmt, der mindestens 4 mm beträgt.

An der freien Stirnfläche 15 des Kupplungskörpers 4 kommt der zentrale Mittelabschnitt 17 des dem Rasenmäher zugeordneten Flügelmessers 18 zur Anlage, und zwar derart, daß Mitnehmerzapfen 19 des Kupplungskörpers 4 passend in Mitnehmeraussparungen 20 des zentralen Mittelabschnitts 17 eingreifen.

Die lösbare Verankerung des Flügelmesser 18 am Kupplungskörper 4 wird über zwei zusätzliche Verschraubungen 21 bewirkt, welche eine seitliche Versetztlage zur Spannschraube 10 haben und relativ zu dieser durch das Isoliermaterial des Kupplungskörpers 4 abgeschirmt sind. Die beiden Verschraubungen 21 greifen sowohl am Flügelmesser 18 als auch am Kupplungskörper 4 radial außerhalb der Mitnehmerausnehmungen 20 und der Mitnehmerzapfen 19 an. Sie bestehen jeweils aus einer Kopfschraube 22 und einer Mutter 23, wobei die Mutter 23 unverlierbar in den Kupplungskörper 4 eingesetzt bzw. in diesen eingeformt sind. Zwecks Wechselns des Flügelmessers 18 ist es lediglich nötig, die Kopfschrauben 22 der Verschraubungen 21 aus den zugehörigen Muttern 23 Kupplungskörper 4 herauszudrehen und sie anschließend nach erfolgtem Wechsel des Flügelmessers 18 wieder einzudrehen.

Da die Verschraubungen 21 gegen die zentrale Spannschraube 10 jeweils durch den Isolierstoff des Kupplungskörpers 4 abgeschirmt sind und auch die zentrale Spannschraube 10 den vorgeschriebenen Mindestabstand 16 vom eingebauten Flügelmesser 18 hat, ist die vorschriftsmäßige elektrische Sicherheit auf einfache Art und Weise gewährleistet und zugleich ein benutzerfreundlicher Wechsel der Flügelmesser 18 möglich.

## Patentansprüche

1. Vorrichtung zur Befestigung eines rotierenden Flügelmessers (18) an der Motorwelle (2) von Elektro-Rasenmähern, bei welcher eine Messerkupplung aus Isolierstoff, z. B. Kunststoff, durch eine zentrale Spannschraube (10) mit der Motorwelle (2) verbunden ist,
**dadurch gekennzeichnet,**
- daß die Messerkupplung einen einzigen Kupplungskörper (4) aufweist, in dem die Spannschraube (10) mit ihrem Kopf innerhalb einer einendig offenen Höhlung (14) aufgenommen ist,
- daß dabei zwischen dieser Spannschraube (10) bzw. der Endfläche ihres Kopfes und der freien Stirnfläche (15) des Kupplungskörpers (4) bzw. der Höhlungs-Öffnung ein Mindestabstand (16) von vier Millimetern vorhanden ist,
- und daß das Flügelmesser (18) an der Stirnfläche (15) des Kupplungskörpers (4) anliegend über wenigstens eine zusätzliche Verschraubung (21) lösbar verankert ist, die eine seitliche Versetztlage zur Spannschraube (10) hat sowie relativ zu dieser durch das Material des Kupplungskörpers (4) abgeschirmt ist.

2. Vorrichtung nach Anspruch 1,
**dadurch gekennzeichnet,**
daß die zusätzlichen Verschraubungen (21) jeweils aus einer Kopfschraube (22) und einer Mutter (23) bestehen und dabei die Mutter (23) in den Kupplungskörper (4) eingesetzt bzw. eingeformt ist.

3. Vorrichtung nach einem der Ansprüche 1 und 2,
**dadurch gekennzeichnet,**
daß zwei zusätzliche Verschraubungen (21) radial versetzt zur Spannschraube (10) dem Kupplungskörper (4) zugeordnet sind.

4. Vorrichtung nach einem der Ansprüche 1 bis 3,
**dadurch gekennzeichnet,**
daß der Kupplungskörper (4) der Messerkupplung eine Baueinheit mit einem Lüfterrotor (8) für die Motorkühlung bildet.

5. Vorrichtung nach einem der Ansprüche 1 bis 4,
**dadurch gekennzeichnet,**
daß zwischen Motorwelle (2) und Kupplungskörper (4) eine Formschluß-Eingriffsverbindung (6, 7) vorgesehen ist.

## Claims

1. A device for the attachment of a rotating blade (18) to the motor shaft (2) of electric lawnmowers, in which a blade coupling made of insulating material, e.g. plastic, is connected by a central tightening screw (10) to the motor shaft (2),
**characterised in that**
- the blade coupling comprises a single coupling member (4), in which the tightening screw (10) with its head is housed inside a cavity (14) open at one end,
- **in that** a minimum distance (16) of four millimetres is provided between this tightening screw (10), i.e. the end face of its head and the free end face (15) of the coupling member (4), i.e. the cavity aperture,
- **and in that** the blade (18) abutting the end face (15) of the coupling member (4) is detachably attached via at least one additional screw fastening (21), which has a lateral offset position in relation to the tightening screw (10) and is also screened in relation thereto by the material of the coupling member (4).

2. A device according to Claim 1,
**characterised in that** each of the additional screw connections (21) consists of a cap screw (22) and a nut (23) respectively and the nut (23) is inserted or moulded into the coupling member (4).

3. A device according to one of Claims 1 and 2,
**characterised in that** two additional screw connections (21) radially offset in relation to the tightening screw (10) are associated with the coupling member (4).

4. A device according to one of Claims 1 to 3,
**characterized in that** the coupling member (4) of the blade coupling forms a structural unit with a fan rotor (8) for the motor cooling.

5. A device according to one of Claims 1 to 4,
**characterized in that** a form-fit engagement connection (6, 7) is provided between the motor shaft (2) and coupling member (4).

## Revendications

1. Dispositif pour la fixation d'une lame rotative (18) sur l'axe (2) du moteur d'une tondeuse à gazon électrique, un dispositif d'accouplement de la lame, fabriqué en un matériau isolant, par exemple un matériau synthétique, étant relié à l'axe (2) du moteur via une vis de serrage (10) centrale, caractérisé
- en ce que le dispositif d'accouplement de la lame présente un seul corps d'accouplement (4) dans lequel est situé la tête de la vis de serrage (10) dans un creux (14) ouvert en une extrémité,
- en ce qu'on a prévu entre cette vis de serrage (10) ou la surface d'extrémité de sa tête et la surface d'extrémité libre (15) du corps d'accouplement (4) ou du creux de l'ouverture une distance minimale (16) de quatre millimètres et
- en ce que la lame (18) est ancrée de manière amovible contre la surface d'extrémité (15) du corps d'accouplement (4) à l'aide d'au moins un raccord à vis (21) supplémentaire qui est déplacé latéralement par rapport à la vis de serrage (10) et qui est protégé par rapport à celle-ci par le matériau du corps d'accouplement (4).

2. Dispositif selon la revendication 1, caractérisé en ce que les raccords à vis supplémentaires (21) sont chaque fois constitués par une vis à tête (22) et un écrou (23), l'écrou (23) étant placé dans le corps d'accouplement (4) de manière à ce qu'on ne puisse pas le perdre ou étant moulé dans ledit corps d'accouplement.

3. Dispositif selon une quelconque des revendications 1 et 2, caractérisé en ce qu'on a disposé deux raccords à vis (21) supplémentaires qui sont déplacés radialement par rapport à la vis de serrage (10) du corps d'accouplement (4).

4. Dispositif selon une quelconque des revendications 1 à 3, caractérisé en ce que le corps d'accouplement (4) de l'accouplement de la lame forme une unité avec un rotor d'aération (8) pour le refroidissement du moteur.

5. Dispositif selon une quelconque des revendications 1 à 4, caractérisé en ce qu'on a prévu entre l'axe du moteur (2) et le corps d'accouplement (4) un assemblage en prise mécanique (6,7).
